# EUROPEAN PATENT APPLICATION

(11) **EP 2 336 916 A1**
(43) Date of publication of application: **22.06.2011**
(21) Application number: 10194562.4
(22) Date of filing: 10.12.2010
(51) Int. Cl.: G06F 17/30, H04N 7/16, H04H 60/33

(54) **Content Providing Server, Content Reproducing Apparatus, Content Providing Method, Content Reproducing Method, Program, and Content Providing System.**

(30) Priority: 18.12.2009 JP 2009288142
(71) Applicant: Sony Corporation, Tokyo 108-0075 (JP)
(72) Inventor: Kohno, Michinari, Minato-ku Tokyo 108-0075 (JP)
(74) Representative: Lewis, Darren John

(57) **Abstract**

A computer-implemented method provides logic for delivering content data. In one implementation, the computer-implemented method receives content data and metadata. The metadata is associated with a plurality of temporal positions in the content data. Based on the association, the content data is selectively delivered

## Description

The present invention relates to a content providing server, a content reproducing apparatus, a content providing method, a content reproducing method, a program, and a content reproducing system,

More and more apparatuses can handle motion pictures with the recent improvement in the performance of personal computers, as well as hard disk recorders, DVD recorders, Blu-ray recorders, TVs, and portable telephones. These apparatuses are now able to handle large quantity of data of motion picture images with the increase in the capacity of recording media, such as a nonvolatile memory and a hard disk. In many cases, metadata such as a filename of a motion picture image, a content, and a recording time are displayed in a thumbnail and icon display screen of the motion picture image, so that a user can easily recognize the content of a stored motion picture image and a motion picture image prepared for a service and the like. For example, Japanese Patent Application Laid-Open No. 2009-105580 discloses an apparatus for outputting an audio of a content currently not being viewed in such a manner that the audio is fast-forwarded by a predetermined time and is mixed with an audio of a content currently being viewed, so that the content other than the content currently being viewed can be provided in an easy-to-understand manner.

However, in the method described in Japanese Patent Application Laid-Open No. 2009-105580, the content mixed with the content currently being viewed is in synchronization with the content currently being viewed, and it is difficult to display a particular scene such as a famous scene, an interesting scene, and a popular scene.

In light of the foregoing, it is desirable to provide a content providing server, a content reproducing apparatus, a content providing method, a content reproducing method, a program, and a content reproducing system, capable of dynamically changing a reproducing start position of content data.

Various respective aspects and features of the invention are defined in the appended claims. Combinations of features from the dependent claims may be combined with features of the independent claims as appropriate and not merely as explicitly set out in the claims.

Consistent with an exemplary embodiment, a computer-implemented method delivers content data. The method includes receiving the content data and receiving metadata. The metadata is associated with a plurality of temporal positions in the content data. Based on the association, the content data is selectively delivered.

As hereinabove described, according to the disclosed exemplary embodiments, the reproducing start position of the content data is determined based on a viewing parameter calculated using metadata associated with the content data. Therefore, the reproducing start position of the content data can be dynamically changed.

Embodiments of the invention will be described with reference to the accompanying drawings, throughout which like parts are referred to by like references, and in which:
FIG. 1 is an explanatory diagram illustrating a content reproducing system according to a first exemplary embodiment of the present invention;
FIG. 2 is an explanatory diagram illustrating the content reproducing system according to the first exemplary embodiment;
FIG. 3A is an explanatory diagram illustrating the content reproducing system according to the first exemplary embodiment;
FIG. 3B is an explanatory diagram illustrating the content reproducing system according to the first exemplary embodiment;
FIG. 4 is a block diagram illustrating a structure of a content providing server according to the first exemplary embodiment;
FIG. 5 is an explanatory diagram illustrating a method for determining a reproducing position according to the first exemplary embodiment;
FIG. 6 is an explanatory diagram illustrating a method for determining a reproducing position according to the first exemplary embodiment;
FIG. 7 is an explanatory diagram illustrating a method for determining a reproducing position according to the first exemplary embodiment;
FIG. 8 is a block diagram illustrating a structure of the content reproducing apparatus according to the first exemplary embodiment;
F1G 9 is an explanatory diagram illustrating an example of a display screen of the content reproducing apparatus according to the first exemplary embodiment;
FIG. 10 is an explanatory diagram illustrating an example of a display screen of the content reproducing apparatus according to the first exemplary embodiment;
FIG. 11 is a flowchart illustrating a method for determining a reproducing position according to the first exemplary embodiment; and

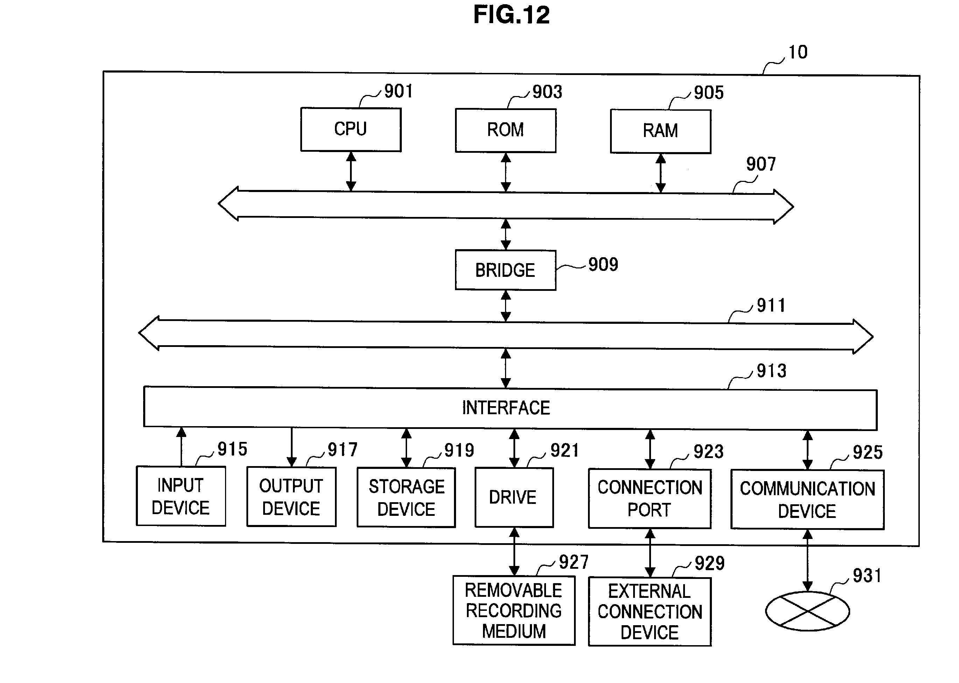

FIG. 12 is a block diagram illustrating a hardware structure of a content providing server according to the first exemplary embodiment.

Hereinafter, exemplary embodiments will be described in detail with reference to the appended drawings. Note that, in this specification and the appended drawings, structural elements that have substantially the same function and structure are denoted with the same reference numerals, and repeated explanation of these structural elements is omitted.

The explanation will be made in the following order:
1. Purpose;
2. First Exemplary Embodiment;
   a. Content reproducing system;
   b. Content providing server;
   c. Content reproducing apparatus;
   d. Example of a display screen;
   e. Method for determining a reproducing position;
3. Hardware structure of the content providing server and the content reproducing apparatus according to the first exemplary embodiment; and
4. Summary.

### 1. Purpose

Before explaining exemplary embodiments, a purpose of embodiments of the present invention will be briefly explained.

As explained above, large quantity of data of motion picture images can be handled with the recent advancement in the technology. Accordingly, techniques and methods for allowing viewers to easily recognize the contents of many motion picture images are desired. In addition to the above examples, examples of such techniques include a technique for displaying, as a still picture image or a motion picture image, the first scene of a motion picture image or a starting page of a program from which commercials or other portion of content are removed, and a method for generating a digest of a content by using only information within the content.

However, in order to carry out the above method, it is necessary to analyze the content according to techniques such as audio analysis and video analysis. In methods such as audio analysis and video analysis, there is an issue in that a lot of resources are necessary for an apparatus carrying out these analyses. Moreover, in these techniques, there is also an issue in that only fixed images can be displayed that are selected or generated according to a predetermined determination criteria based on an analysis result.

On the other hand, in a certain motion picture image content (for example, a movie content), a popular scene changes each day since the content is provided. Suppose a user who thinks that "I do not have a time to view the entire content, but I want to view only such popular scenes." However, a technique for extracting and displaying such dynamically changing scenes has not yet been developed.

Accordingly, in the below-explained exemplary embodiments, a technique is provided to dynamically change a position from which a content reproduction is started without using much resources.

The inventor has assiduously studied in order to achieve the above technique. As a result, the inventor has conceived of the technique as explained below. In the explanation below, a content providing server, a content reproducing apparatus, and a method for determining a reproducing position according to the exemplary embodiment will be explained in detail.

### 2. First exemplary embodiment

### a. Content reproducing system

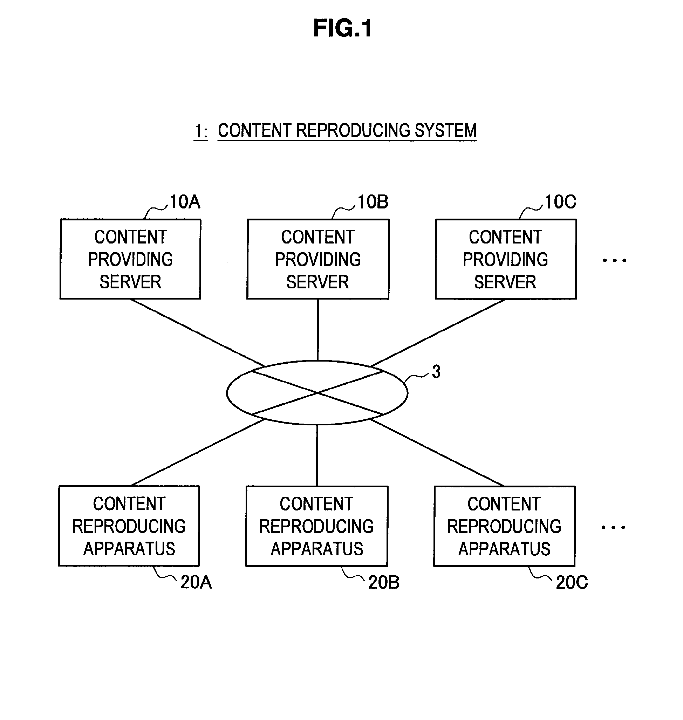

First, a content reproducing system according to the first exemplary embodiment will be explained in detail with reference to FIGS. 1 to .3B. FIGS. 1 to 3B are explanatory diagrams illustrating the content reproducing system according to the present exemplary embodiment.

For example, as shown in FIG. 1, a content reproducing system 1 includes content providing servers 10A, 10B, and 10C (hereinafter referred to as "content providing servers 10") and content reproducing apparatuses 20A, 20B, and 20C (hereinafter referred to as "content reproducing apparatuses 20"). The content providing servers 10 and the content reproducing apparatuses .20 are connected to each other via a communication network 3.

The communication network 3 is a communication circuit network for allowing bidirectional communication between the content providing servers 10 and the content reproducing apparatuses 20. Examples of communication circuit networks include public circuit networks such as the Internet, a telephone circuit network, a satellite communication circuit, and a simultaneous communication path, and dedicated circuit networks such as WAN(Wide Area Network), LAN(Local Area Network), IP-VPN (Internet Protacol-Virtual Private Network), Ethernet (registered trademark), and wireless LAN. This communication network 3 may be connected either wirelessly or via wire. That is, the content reproducing system I according to the present exemplary embodiment may be a part of a public service using a public circuit network such as the Internet, or may be a private one using a home network such as a LAN not disclosed to any third party.

The content providing server 10 is a server for managing various kinds of content data (for example, motion picture image contents such as video contents) and various kinds of information associated with the content data (for example, metadata). The content providing server 10 provides the content data managed in the content providing server 10 and metadata of the content data to a destination device (for example, the content reproducing apparatus 20) in response to a request from the destination device.

The content reproducing apparatus 20 may be an apparatus for reproducing motion picture image contents obtained from the content providing server 10. In addition, the content reproducing apparatus 20 can directly obtain motion picture contents from an external apparatus (for example, a digital still camera, a digital video camera, and the like) connected to the content reproducing apparatus 20 via a predetermined interface. In addition, the content reproducing apparatus 20 can also obtain and reproduce motion picture image contents from another content reproducing apparatus 20.

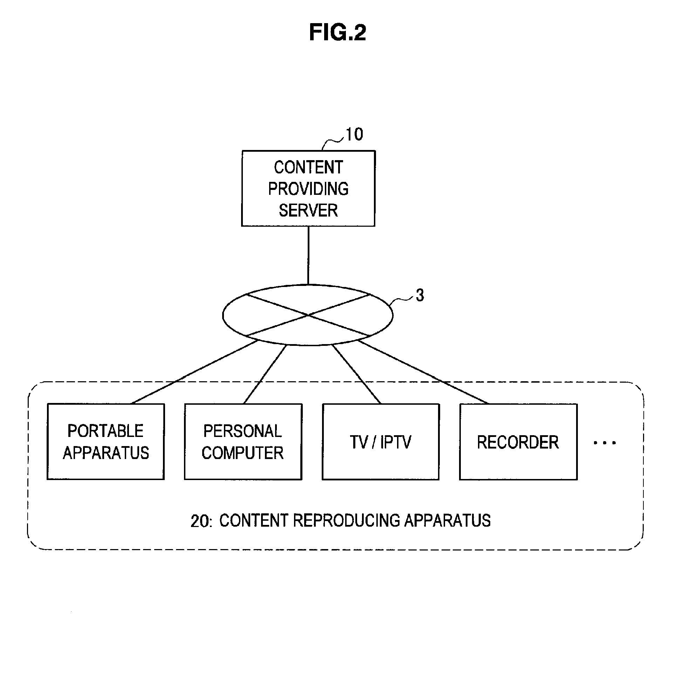

For example, as shown in FIG. 2, this content reproducing apparatus 20 may be a portable apparatus such as a portable telephone, a portable music player, or a PDA, or may be a personal computer, The content reproducing apparatus 20 may be an image display apparatus such as a television set and an IPTV, or may be various kinds of recorders such as an HDD recorder, a DVD recorder, and a Blu-ray recorder It should be understood that what are shown in FIG. 2 are merely examples. The content reproducing apparatus .20 may be any apparatus as long as the apparatus can communicate via a network and reproduce motion picture image contents.

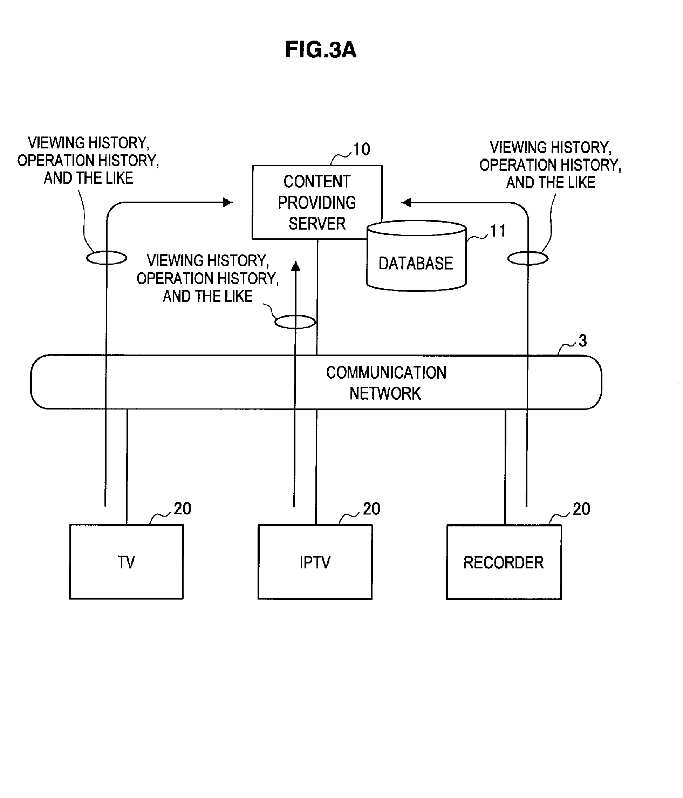

As shown in FIG. 3A, the content providing server 10 can obtain metadata such as a viewing history of content data, an operation history during content playback, comments on the content data, a viewer profile, a popularity index, and a violence rating, from various kinds of content reproducing apparatuses 20 connected via the communication network 3. For example, such metadata may be generated based on an evaluation criterion, The content providing server 10 stores and manages the thus obtained metadata in a database 11 arranged in the content providing server 10 or outside of the server.

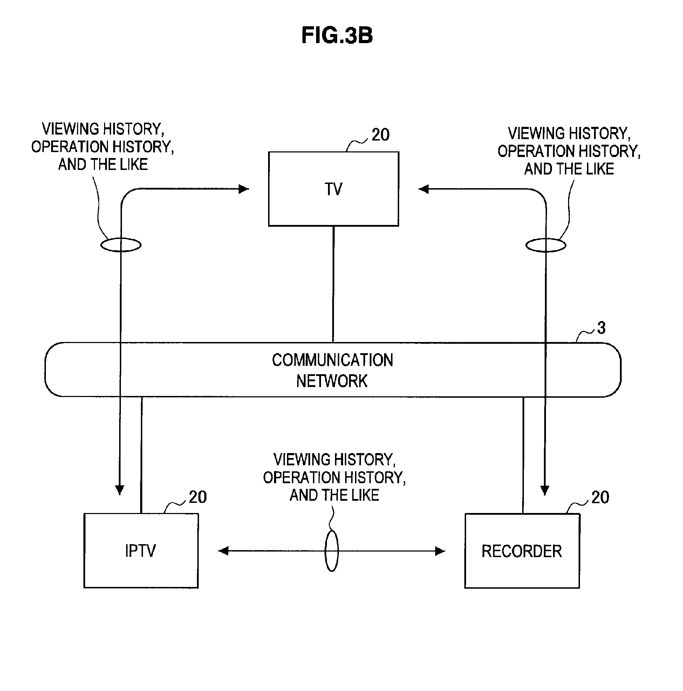

For example, as shown in FIG. 3B, each of the content reproducing apparatuses 20 can obtain metadata, such as the viewing history of the content data, the operation history during content playback, the comments on content data, the viewer profile, the popularity index, and the violence rating, from other content reproducing apparatuses 20 connected via the communication network 3.

In FIGS. 1 to 3B, the communication network 3 makes connection between the content providing server 10 and the content reproducing apparatus 20 and between the content reproducing apparatuses 20, Alternatively, these apparatuses may be directly connected without relying on any communication network.

In the content reproducing system 1, according to the present exemplary embodiment, at least one of the content providing servers 10 and the content reproducing apparatuses 20 may have a function for determining a reproducing position based on a viewing parameter as explained later.

### b. Content providing server

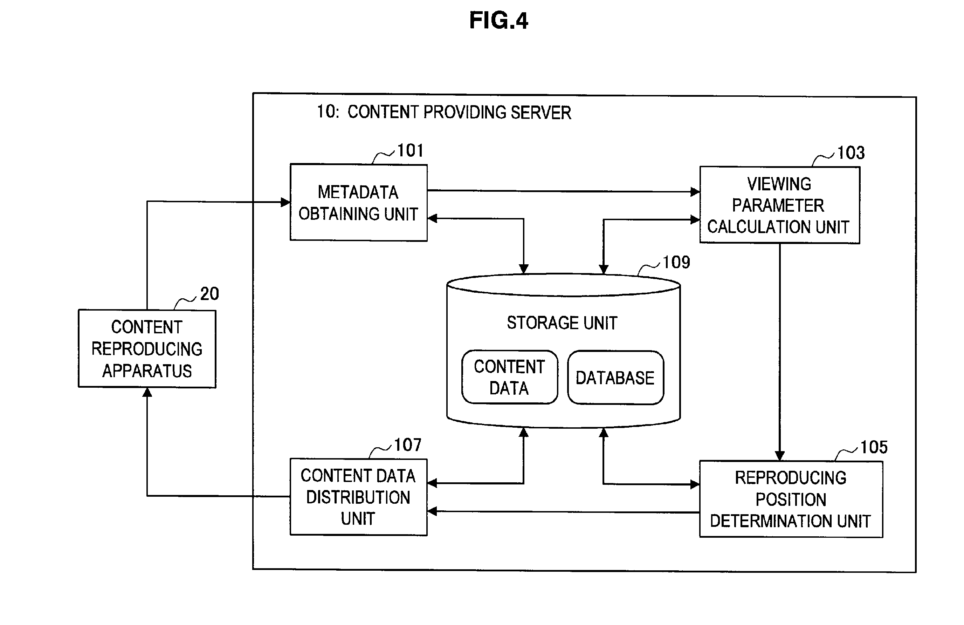

Subsequently, the structure of the content providing server 10 according to the present exemplary embodiment will be explained in detail with reference to FIG. 4. FIG. 4 is a block diagram illustrating the structure of the content providing server 10 according to the present exemplary embodiment.

For example, as shown in FIG. 4, the content providing server 10 according to the present exemplary embodiment includes a metadata obtaining unit 101, a viewing parameter calculation unit 103, a reproducing position determining unit 105, a content data distribution unit 107, and a storage unit 109. Further, the content providing server 10 may include a content analysis unit for performing various kinds of audio analyses and video analyses on content data. Further, the content providing server 10 may include not only the above processing units but also one or a plurality of processing units for distributing and managing the content data.

The metadata obtaining unit 101 is realized with, for example, a CPU (Central Processing Unit), a ROM (Read Only Memory), a RAM (Random Access Memory), a communication device, and the like. The metadata obtaining unit 101 obtains various kinds of metadata associated with content data from the content reproducing apparatus 20. The metadata obtaining unit 101 obtains metadata at any timing. For example, the metadata obtaining unit 101 may obtain metadata when some kind of communication is performed by the content reproducing apparatus 20, or may periodically obtain metadata with a predetermined time interval. Alternatively, the metadata obtaining unit 101 may obtain metadata in response to a predetermined operation performed by a user.

Examples of metadata obtained by the metadata obtaining unit 101 are as follows:
(i) viewing history of contents (including history information about viewing scenes of contents and operation history information during content reproduction);
(ii) user feedback information such as comments and the degree of recommendation about contents;
(iii) information about preference of a user (for example, attribute information such as preferred genres);
(iv) a viewer profile;
(v) a popularity index;
(vi) a violence rating; and
(iv) others types of metadata appropriate to metadata obtaining unit 101.

The metadata obtaining unit 101 transfers the above-described metadata obtained from each of the content reproducing apparatuses 20 to the later-explained viewing parameter calculation unit 103. Further, the metadata obtaining unit 101 may record the obtained metadata in a database and the like stored in the later-explained storage unit 109.

The viewing parameter calculation unit 10.3 is constituted with, for example, a CPU, a ROM, a RAM, and the like. The viewing parameter calculation unit 103 uses predetermined metadata associated with content data to calculate viewing parameters serving as an index representing the state of viewing of the content data. At a temporal position of the content data (i.e., an elapsed time from the beginning of the content data), this viewing parameter is calculated for a certain continuous time interval or calculated discontinuously. The metadata used for the calculation of the viewing parameters is any one of metadata obtained by the metadata obtaining unit 101 from the content reproducing apparatus 20 and metadata recorded in the database stored in the later-explained storage unit 109.

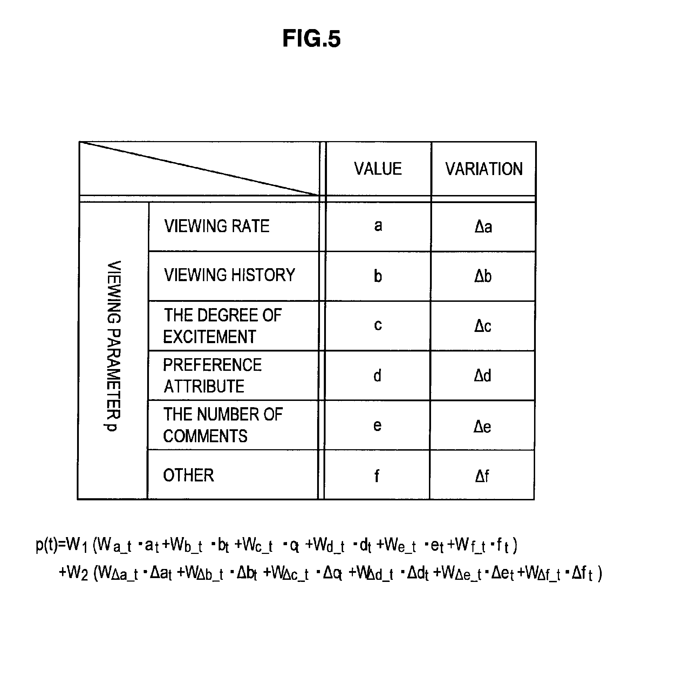

The viewing parameter calculation unit 103 can use any available metadata as the metadata used during calculation of viewing parameters. The viewing parameter calculation unit 103 uses, for example, metadata (viewing rate, viewing history, the degree of excitement, preference attribute, the number of comments, other metadata), as shown in FIG. 5, in order to calculate the viewing parameter p. Among the above parameters, the viewing history includes history information about viewing scenes, operation history information during viewing of the content data, and the like. Further, the preference attribute is metadata reflecting individual preferences of a user- For example, the preference attribute may be a numerical value representing the degree of agreement between the content data and a user's preference. The other metadata include, for example, various kinds of analyses generated by an analysis unit included within the content providing server 10, and various kinds of analyses results of the content data generated by a content reproducing apparatus 20 having an analysis unit.

The viewing parameter calculation unit 103 normalizes and uses metadata used for calculation of these viewing parameters. Further, the viewing parameter calculation unit 103 may calculate variations of the normalized metadata.

The viewing parameter calculation unit 103 calculates the viewing parameter p according to any calculation method by using these metadata, the variations of the metadata, and the like. For example, the calculation method as shown in FIG. 5 can also be used. In the calculation method for calculating the viewing parameter p as shown in FIG. 5, a linear combination of the metadata and the variations of the metadata multiplied by predetermined weighting coefficients W is calculated as the viewing parameter. Herein, in the expression as shown in FIG. 5, W_{x_t} represents a weighting coefficient for metadata x at a time t W₁ represents a weighting coefficient corresponding to a value of metadata. W₂ represents a weighting coefficient corresponding to a variation of metadata.

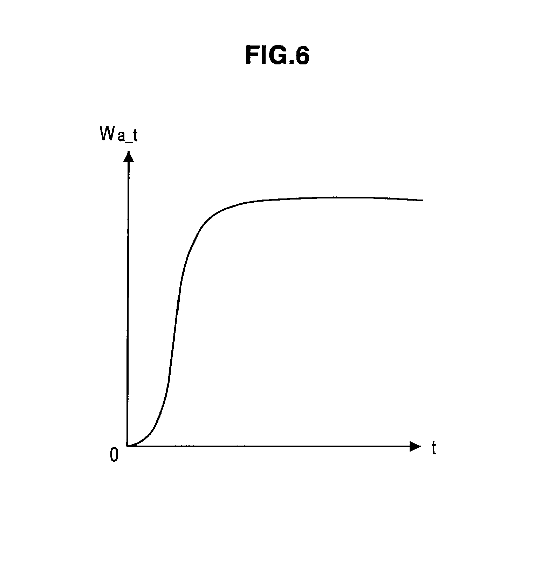

Herein, the weighting coefficient may be a constant value regardless of the time t, or may change according to the time t. The weighting coefficient may be determined statistically through various kinds of mechanical learning techniques, or may be determined according to a judgment of a user. Alternatively, the weighting coefficient may be randomly determined, so that a calculated viewing parameter may be based on a factor of randomness. As necessary, any one of the coefficients W_{x_t}, W₁, and W₂ may be zero. For example, FIG. 6 illustrates an example of weighting coefficient for metadata a about a viewing rate. In FIG. 6, the weighting coefficient is small at the beginning of a content, and thereafter, the weighting coefficient is rapidly increased to a large value. This setting is based on an experience that "the viewing rate is likely to be high at the beginning of a content",

In the expression shown in FIG. 5, the viewing parameter p becomes larger for a scene which attracts many viewers in some sense.

Herein, the viewing parameter calculation unit 103 calculates the viewing parameter p again and again, and updates the viewing parameter p. The viewing parameter calculation unit 103 can calculate the viewing parameter p again (that is, update the viewing parameter p) at any timing. For example, the viewing parameter calculation unit 103 may calculate the viewing parameter again with a predetermined time interval. Alternatively, the viewing parameter calculation unit 103 may calculate the viewing parameter again every time the content providing server 10 performs some kind of communication with the content reproducing apparatus 20. Alternatively, the viewing parameter calculation unit 103 may calculate the viewing parameter again in response to an instruction given by a user. The viewing parameter calculation unit 103 can reflect a behavior of a user on each occasion by thus calculating the viewing parameter again at any timing.

The viewing parameter calculation unit 103 notifies the viewing parameter p thus calculated to the later-explained reproducing position determining unit 105 every time the viewing parameter calculation unit 103 calculates the viewing parameter p. Further, the viewing parameter calculation unit 103 may associate the calculated viewing parameter p with information about the calculated time, and record the calculated viewing parameter p in the storage unit 109.

The reproducing position determining unit 105 is constituted with, for example, a CPU, a ROM, a RAM, and the like. When the viewing parameter calculation unit 103 notifies the viewing parameter p to the reproducing position determining unit 105, the reproducing position determining unit 105 determines, based on the notified viewing parameter p, a temporal position from which the content reproducing apparatus 20 starts reproduction of a content. More specifically, the reproducing position determining unit 105 determines a temporal position t in which a predetermined condition (that is, a selection criterion) is satisfied in a viewing parameter p(t), and the temporal position t is adopted as a temporal position from which reproduction of the content is started.

The predetermined condition for determining a reproducing start position can be appropriately determined. For example, the reproducing position determining unit 105 may detect a temporal position t that yields an extreme value of the viewing parameter p (that is, a first temporal position) and determine the reproducing position based on the time t that yields this extreme value.

More specifically, the reproducing position determining unit 105 detects a plurality of temporal positions yielding extreme values, such as a time t_max corresponding to a peak that yields the maximum value of the viewing parameter p and a time t 2nd corresponding to a peak that yields the second largest value (that is, a second temporal positon), Subsequently, for example, the reproducing position determining unit IOS can determine the time t_max yielding the maximum value of the viewing parameter p or a time close to t_max, and can adopt the time t_max or the time close to t_max as the reproducing start position.

How much time before a certain time t (for example, t_max) a reproduction is started (for example, in a case where a trailer is reproduced, how much time after the certain time t the reproduction is stopped) can be appropriately determined. For example, the reproducing position determining unit 105 may determine the range of reproduction according to the width of the peak yielding the extreme value. Accordingly, the reproduction range can be appropriately set, so that, for example, a portion continuously having a high viewing parameter is reproduced for a long time.

Alternatively, the reproducing position determining unit 105 may appropriately change a temporal position to be selected, so that, for example, at a certain point of time, a time close to a time yielding t_max is adopted as the reproducing start position, and at another point of time, a time close to a time yielding t_2nd is adopted as the reproducing start position. In such case, the reproducing start position is based on a factor of randomness, which allows a user to enjoy viewing a reproduction of any one of the plurality of scenes which attract viewers.

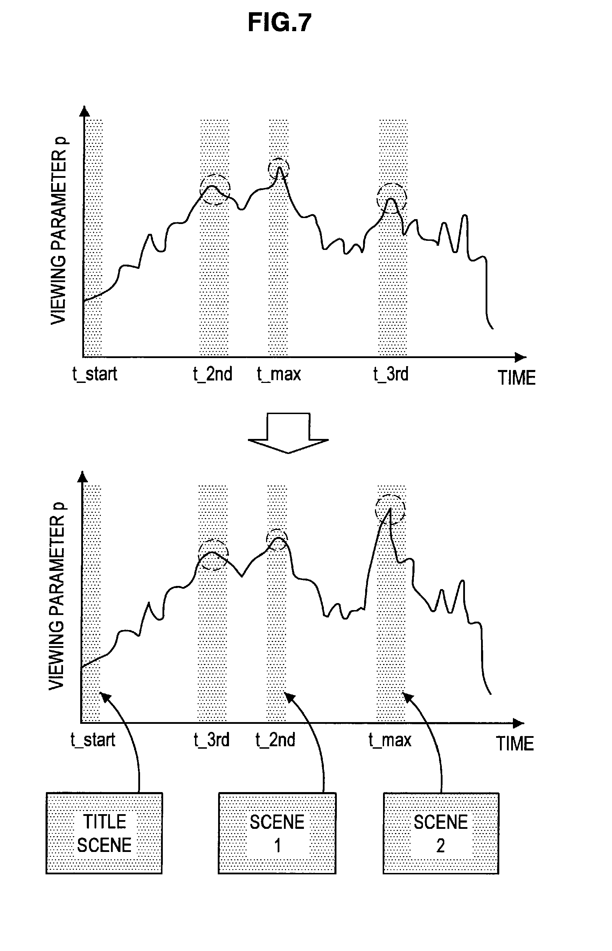

For example, the reproducing position determining unit 105 determines a time close to a time t yielding t_max and adopts the time as the reproducing start position, and a viewing parameter p, as shown in the upper part of FIG. 7, is received from the viewing parameter calculation unit 103. In this case, the reproducing position determining unit 105 determines a time close to a time t yielding t_max, and adopts the time as the reproducing start position, so that a corresponding "scene 1" (that is, a first portion of the content data) is displayed on a display screen of a viewer. As explained above, the viewing parameter p is a parameter that is updated whenever necessary, and accordingly, at a certain point of time, the viewing parameter p changes, as shown in the lower part of FIG. 7. When the parameter in the upper part of FIG. 7 changes to the parameter in the lower part of FIG. 7, the position yielding t_max in the upper part of FIG. 7 yields t_2nd in the lower part of FIG. 7, and the position yielding t_3rd in the upper part of FIG. 7 yields t_max in the lower part of FIG. 7. At this occasion, the reproducing position determining unit 105 determines a position close to t-max in the lower part of FIG. 7, and adopts the position as the reproducing start position, so that a corresponding "scene 2" is displayed on the display screen of the viewer (that is, the second portion of the content data).

When the reproducing position determining unit 105 determines the reproducing start position based on a viewing parameter p at a certain point of time, the reproducing position determining unit 105 provides information about the determined reproducing start position to the later-explained content data distribution unit 107. Further, the reproducing position determining unit 105 may store the information about the determined reproducing start position in the storage unit 109 and the like.

As described above, the reproducing position determining unit 105 according to the present exemplary embodiment determines the reproducing start position based on the viewing parameter, i.e., a parameter updated in succession, every time the viewing parameter is updated. Accordingly, the content providing server 10 according to the present exemplary embodiment can dynamically change the reproducing start position of the content.

Referring back to FIG. 4, the content data distribution unit 107 will be explained.

The content data distribution unit 107 is realized with, for example, a CPU, a ROM, a RAM, a communication device, and the like. In response to a request made by the content reproducing apparatus 20, the content data distribution unit 107 distributes content data, which is stored by the content providing server 10 in an external storage device or the storage unit 109, to the content reproducing apparatus 20 having made the request. Further, the content data distribution unit 107 can also distribute not only the content data, but also the metadata associated with the distributed content data. In response to a request made by the content reproducing apparatus 20, the content data distribution unit 107 may distribute only the metadata associated with some content data to the content reproducing apparatus 20 having made the request. As described above, the content data distribution unit 107 is a processing unit playing the role of providing content data, and therefore, the content data distribution unit 107 can calculate parameters, such as viewing rate, of the contents.

When the content reproducing apparatus 20 requests data corresponding to a main part of the content data from the beginning of the content data, the content data distribution unit 107 distributes the corresponding content data from the beginning. Alternatively, there may be a case where the content reproducing apparatus 20 requests distribution of the main part of the content or a representation of the content (for example, a thumbnail image), partway through the content data. In such case, the content data distribution unit 107 starts distribution of the content data from the portion corresponding to the requested temporal position, based on the information about the reproducing start position notified by the reproducing position determining unit 105, Accordingly, when the content reproducing apparatus 20 requests displaying of a list of thumbnail images and a trailer on the display screen of the content reproducing apparatus 20, the content data distribution unit 107 can distribute the content data from the portion corresponding to the scene which currently attracts interest.

The storage unit 109 is an example of a storage device of the content providing server 10. This storage unit 109 stores various kinds of content data of the content providing server 10 and various kinds of metadata and the like including thumbnail images and trailers associated with content data- It should be noted that the metadata may be stored in the storage unit 109 in a form of' database, together with metadata obtained by the metadata obtaining unit 101 from the content reproducing apparatus 20. Further, this storage unit 109 may store various parameters or progress of processing that are necessary to be stored while the content providing server 10 performs certain processing, and may store various kinds of databases and so on as necessary. This storage unit 109 can be freely read and written by each processing unit of the content providing server 10 according to the present exemplary embodiment.

Examples of the functions of the content providing server 10 according to the present exemplary embodiment have been hereinabove explained. Each of the above constituent elements may be made with a generally-used member and circuit, or may be made with hardware dedicated for the function of each constituent element. Alternatively, all of the functions of the constituent elements may be performed by a CPU and the like. Therefore, the used configuration may be changed as necessary in accordance with the state of art at the time when the present exemplary embodiment is carried out.

It is possible to make a computer program for realizing the functions of the above-described content providing server according to the present exemplary embodiment, and the computer program can be implemented on a personal computer and the like. Further, a computer-readable recording medium having stored such a computer program can be provided. Examples of recording media include a magnetic disk, an optical disk, a magneto-optical disk, and a flash memory. Further, for example, the above computer program may be distributed by a network, without using any recording medium.

### c. Content reproducing apparatus

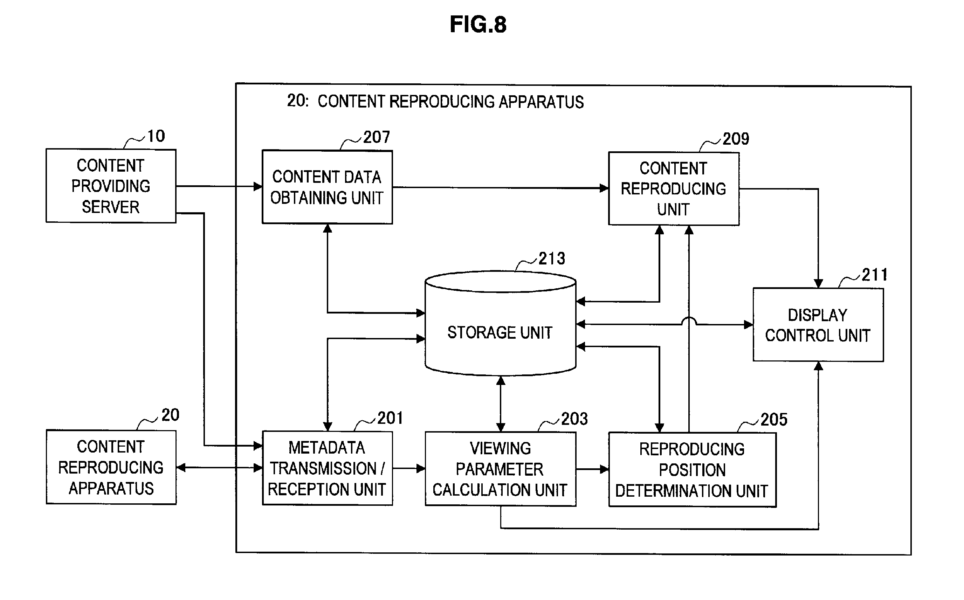

Subsequently, the structure of the content reproducing apparatus 20 will be explained with reference to FIG. 8, in a case where the content reproducing apparatus 20 has a function of determining the reproducing start position of the content. FIG. 8 is a block diagram illustrating the functions of the content reproducing apparatus 20 according to the present exemplary embodiment.

As shown in FIG. 8, the content reproducing apparatus 20 includes a metadata transmission reception unit 201, a viewing parameter calculation unit 203, a reproducing position determining unit 205, a content data obtaining unit 207, a content reproducing unit 209, a display control unit 211, and a storage unit 213. Further, the content reproducing apparatus 20 may include a content analysis unit for performing various kinds of audio analyses and video analyses on contents.

The metadata transmission reception unit 201 is realized with, for example, a CPU, a ROM, a RAM, a communication device, and the like. The metadata transmission reception unit 201 receives metadata from the content providing server 10 or another content reproducing apparatus 20 at any timing, and transmits metadata to the content providing server 10 or another content reproducing apparatus 20. When communication is performer between the content providing server 10 and another content reproducing apparatus, this metadata transmission reception unit 201 transmits and receives metadata in response to a user's operation or at a predetermined time interval- When the metadata transmission reception unit 201 transmit metadata, the metadata transmission reception unit 201 transmits metadata stored in the later-explained storage unit 213 to a predetermined apparatus. When the metadata transmission reception unit 201 receives metadata from another apparatus, the metadata transmission reception unit 201 provides the received metadata to the later-explained viewing parameter calculation unit 203. Further, the metadata transmission reception unit 201 may store the metadata obtained from another apparatus to the later-explained storage unit 213.

The viewing parameter calculation unit 203 is realized with, for example, a CPU, a ROM, a RAM, and the like. The viewing parameter calculation unit 203 according to the present exemplary embodiment has the same structure as the viewing parameter calculation unit 103 of the content providing server 10 according to the present exemplary embodiment, and is a processing unit achieving the same effects. Therefore, the detailed description thereof is omitted in the explanation below.

The reproducing position determining unit 205 is realized with, for example, a CPU, a ROM, a RAM, and the like. The reproducing position determining unit 205 according to the present exemplary embodiment has the same structure as the reproducing position determining unit 105 of the content providing server 10 according to the present exemplary embodiment, and is a processing unit achieving the same effects. Therefore, the detailed description thereof is omitted in the explanation below.

The content data obtaining unit 207 is realized with, for example, a CPU, a ROM, a RAM, a communication device, and the like. The content data obtaining unit 207 obtains content data that can be reproduced by the content reproducing apparatus 20 from the content providing server 10 or another content reproducing apparatus 20, Further, the content data obtaining unit 207 can also directly obtain content data from a digital camera and the like connected to the content reproducing apparatus 20. The content data obtaining unit 207 transmits the obtained content data to the later-explained content reproducing unit 209. The content data obtaining unit 207 may store the obtained content data to the later-explained storage unit 213 and the like.

The content reproducing unit 209 is realized with, for example, a CPU, a ROM, a RAM, and the like. The content reproducing unit 209 reproduces content data obtained by the content data obtaining unit 207 or content data stored in the content reproducing apparatus 20, so that the later-explained display control unit 211 displays the content on the display screen.

When a viewer desires to view the content from the beginning, the content reproducing unit 209 reproduces the corresponding content data from the beginning. Alternatively, there may be a case where the user desires to view the main part of the content data or thumbnails of the content, partway through the content data, In such case, the content reproducing unit 209 starts reproduction of the content data from the portion corresponding to the desired temporal position, based on the information about the reproducing start position notified by the reproducing position determining unit 205.

The display control unit 211 is realized with, for example, a CPU, a ROM, a RAM, and the like. The display control unit 211 is a processing unit for performing display control on a display content that is displayed by a display unit (not shown) of the content reproducing apparatus 20 according to the present exemplary embodiment. In response to a user's operation and an instruction given by the content reproducing unit 209, the display control unit 211 can display a list of content data that can be reproduced on the display screen, display a trailer of content data that can be reproduced on the display screen, and display a reproduction screen of content data on the display screen. In the explanation below, the control processing of the display screen carried out by this display control unit 211 will be explained again.

The storage unit 213 is an example of storage device of the content reproducing apparatus .20. This storage unit 213 stores various kinds of content data possessed by the content reproducing apparatus 20 and various kinds of metadata and the like including thumbnail images and trailers associated with content data. It should be noted that the metadata may be stored in the storage unit 213 in a form of database, together with metadata obtained by the metadata transmission reception unit 201 from another apparatus. Further, this storage unit 213 3 may store various parameters or progress of processing that are necessary to be stored while the content reproducing apparatus 20 performs certain processing, and may store various kinds of databases and so on as necessary. This storage unit 213 can be freely read and written by each processing unit of the content reproducing apparatus 20 according to the present exemplary embodiment.

Examples of the functions of the content reproducing apparatus 20 according to the present exemplary embodiment have been hereinabove explained. Each of the above constituent elements may be made with a generally-used member and circuit, or may be made with hardware dedicated for the function of each constituent element. Alternatively, all of the functions of the constituent elements may be performed by a CPU and the like. Therefore, the used configuration may be changed as necessary in accordance with the state of art at the time when the present exemplary embodiment is carried out.

In a case where the content reproducing apparatus 20 does not have the above-described viewing parameter calculation unit 203, and has only the reproducing position determining unit 205, the reproducing position determining unit 205 can determine a reproducing position by using a viewing parameter obtained from the content providing server 10. Alternatively, there may be a case where the content reproducing apparatus 20 has neither the viewing parameter calculation unit 203 nor the reproducing position determining unit 205. In such case, when the content reproducing apparatus 20 obtains content data from the content providing server 10, the content reproducing apparatus 20 may notify a desired reproducing method of a content, and may reproduce the obtained content data as it is.

It is possible to make a computer program for realizing the functions of the above-described content reproducing apparatus according to the present exemplary embodiment, and the computer program can be implemented on a personal computer and the like. Further, a computer-readable recording medium having stored such a computer program can be provided. Examples of recording media include a magnetic disk, an optical disk, a magneto-optical disk, and a flash memory. Further, for example, the above computer program may be distributed by a network, without using any recording medium.

### d. Examples of display screen

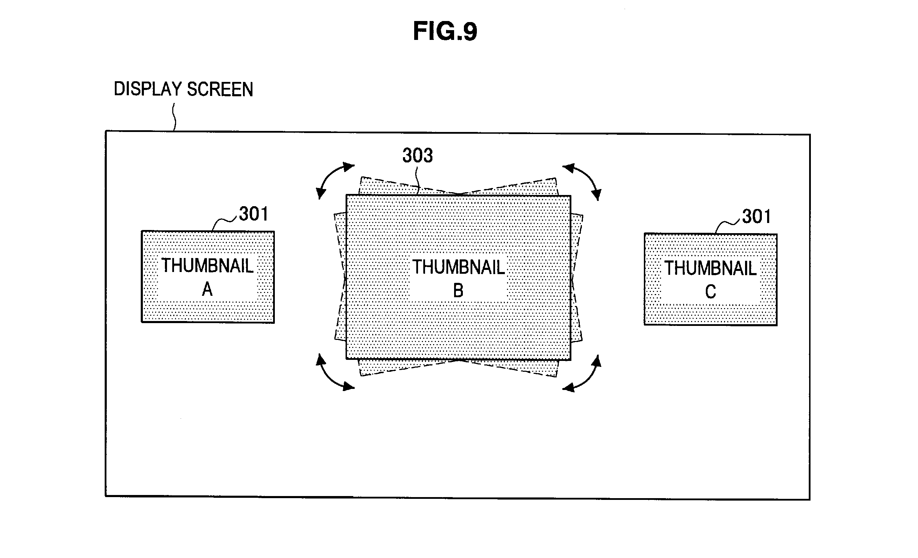

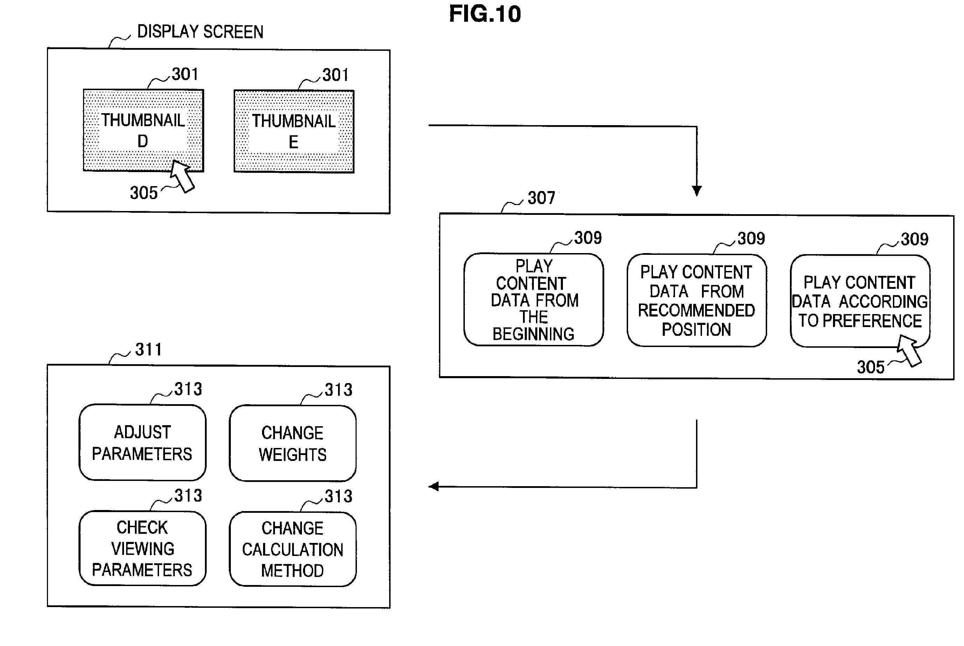

Subsequently, examples of display screens displayed on the display unit according to the display control of the display control unit 211 of the present exemplary embodiment will be explained in detail with reference to FIGS. 9 and 10. FIGS. 9 and 10 are explanatory diagrams illustrating examples of display screens of the content reproducing apparatus 20 according to the present exemplary embodiment,

In the example below, the content reproducing apparatus 20 mainly reproduces content data at around a time at which the viewing parameter p has a large value. At this occasion, when the content reproducing unit 209 displays a representation of the content data, for example, thumbnails of the content data, on the display screen, the content reproducing unit 209 changes a scene to be displayed as thumbnail images, based on the viewing parameter obtained from the viewing parameter calculation unit 203. As a result, the display control unit 211 performs control so as to display thumbnail images on the display screen according to the viewing parameter, so that the content data displayed on the display screen changes on each occasion. As a result, the viewer of the content reproducing apparatus 20 can see different thumbnail images, which are displayed on each occasion even if the content is the same.

The display control unit 211 may classify the sizes of objects such as thumbnails displayed on the display screen into several grades according to the magnitude of the viewing parameter. At this occasion, the display control unit 211 changes the size of an object according to the magnitude of the viewing parameter corresponding to the content data of which object is displayed. At this occasion, the maximum value of the viewing parameter or the average value of the viewing parameter may be used as the magnitude of the viewing parameter.

For example, it is assumed that there are three kinds of content data, i.e., content data A to C, and the viewing parameter of the content B is larger than those of the content data A and C. At this occasion, the display control unit 211 may display a larger thumbnail image 303 corresponding to a thumbnail B than thumbnail images 301 corresponding to thumbnails A and C.

Further, as shown in FIG. 9, the display control unit 211 may move (e.g., rotate) an object having a high viewing rate or having a large number of comments, and may move an object corresponding to a content whose viewing parameter has been updated. Accordingly, viewers can easily find content data which attracts interest in some sense.

As shown in FIG. 10, it is assumed that two kinds of thumbnail images 301 are displayed on the display screen, and one of the thumbnail images 301 is selected by a position specifying object 305. At this occasion, the display control unit 211 may request the content reproducing unit 209 to start reproduction of a content corresponding to the selected thumbnail image.

At this occasion, the display control unit 211 may change the display screen and display a new window 307 on the display screen, so as to display button objects 309 for allowing a viewer to select how a content is to be reproduced. In the example shown in the middle part of FIG. 10, three kinds of button objects 309, such as "play content data from the beginning," "play content data from recommended position," and "play content data according to preference," are displayed as the button objects 309. When the viewer selects a button such as "play content data from recommended position," the content reproducing unit 209 starts reproduction of the content data from the reproducing start position determined by the reproducing position determining unit 205.

When a user selects a predetermined button or a button for setting change, the display control unit 211 may display a setting window 311 on the display screen as shown in the lower part of FIG. 10. This setting window 311 displays button objects 313 for displaying various kinds of setting screens such as parameter adjustment, change of weighting coefficient, reference of viewing parameter, and change of calculation method. The viewer can perform a predetermined operation on the content reproducing apparatus 20 by selecting these button objects 313.

As described above, the display control unit 211 according to the present exemplary embodiment can perform various kinds of display controls such as changing of a display form of an object by using a viewing parameter.

### e. Method for determining a reproducing position

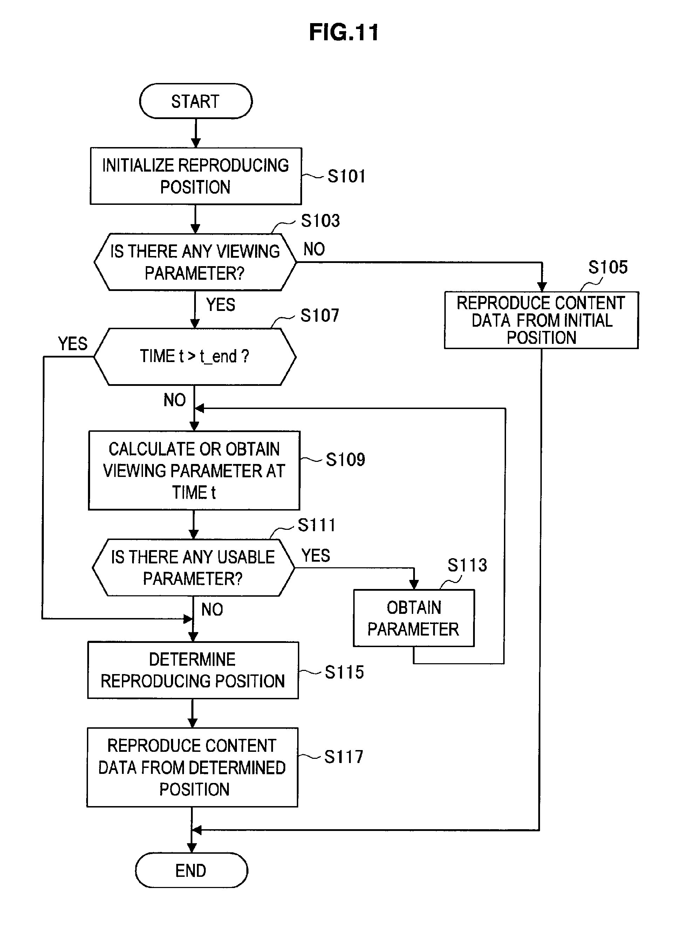

Subsequently, a flow of a method for determining a reproducing position, performed by the content providing server 10 and the content reproducing apparatus 20 according to the present exemplary embodiment, will be briefly explained with reference to FIG. 11. FIG. 11 is a flow diagram illustrating the method for determining a reproducing position of content data according to the present exemplary embodiment. In FIG. 11, the content reproducing apparatus 20 determines a reproduction position of the content data and starts reproduction of the content data. However, the flow of determining the reproduction position can be similarly performed by the content providing server 10,

First, the content reproducing apparatus 20 initializes the reproducing position before the content reproducing apparatus 20 determines the reproducing position (step S201). Subsequently, the content reproducing apparatus 20 determines whether to use a viewing parameter or not in order to determine the reproducing position (step S103). When a setting is made not to use the viewing parameter, or when there is no viewing parameter, the content reproducing unit 209 of the content reproducing apparatus 20 starts reproduction of the content data from the initial position, i.e., from the beginning of the content data (step S 105).

On the other hand, when there is a viewing parameter, a determination is made as to whether a time t is larger than a length t_end of the content data (step S107), When the time t is larger than t_end, the viewing parameter calculation unit 203 does not calculate the viewing parameter, and the content reproducing apparatus 20 performs step S115, as explained later.

When the time t is smaller than t_end, the viewing parameter calculation unit 203 calculates the viewing parameter according to the method as shown in FIG. 5 (step 5109). In a case where the content reproducing apparatus 20 does not have the viewing parameter calculation unit 203, a calculated viewing parameter is obtained from the content providing server 10 or another content reproducing apparatus 20 (step S109).

Subsequently, the viewing parameter calculation unit 203 determines whether there is any available viewing parameter other than the viewing parameter calculated by the content reproducing apparatus 20 (step 5111). When there is an available viewing parameter, the content reproducing apparatus 20 obtains the viewing parameter from a corresponding apparatus (step S113), and the viewing parameter calculation unit 203 calculates the viewing parameter again.

Subsequently, the reproducing position determining unit 205 determines a reproducing start position (e.g., a reproducing scene), a display method onto the screen, a display effect, and the like, based on the viewing parameter calculated by the viewing parameter calculation unit 203, or based on the viewing parameter obtained from the outside (step S115). Thereafter, the reproducing position determining unit 205 notifies information including the determined reproducing start position to the content reproducing unit 209.

The content reproducing unit 209 uses the notified information including the reproducing start position to start reproduction of the content data from the position determined by the reproducing position determining unit 205 (step S117).

As described above, in the method for determining a reproducing position according to the present exemplary embodiment, the reproducing start position of the content data can be determined by using the viewing parameter calculated using various kinds of metadata. Accordingly, in the method for determining the reproducing position according to the present exemplary embodiment, the reproducing start position of the content can be dynamically changed.

### 3. Hardware Configuration

Next, the hardware configuration of the content providing server 10 according to an exemplary embodiment will be described in detail with reference to FIG. 13. FIG. 13 is a block diagram for illustrating the hardware configuration of the content providing server 10 according to the exemplary embodiment.

The content providing server 10 mainly includes a CPU 901, a ROM 903, and a RAM 905. Furthermore, the content providing server 10 also includes a host bus 907, a bridge 909, an external bus 911, an interface 913, an input device 915, an output device 917, a storage device 919, a drive 921, a connection port 923, and a communication device 925.

The CPU 901 serves as an arithmetic processing apparatus and a control device, and controls the overall operation or a part of the operation of the content providing server 10 according to various programs recorded in the ROM 903, the RAM 905, the storage device 919, or a removable recording medium 927. The ROM 903 stores programs, operation parameters, and the like used by the CPU 901. The RAM 905 primarily stores programs used in execution of the CPU 901 and parameters and the like varying as appropriate during the execution. These are connected with each other via the host bus 907 configured from an internal bus such as a CPU bus or the like.

The host bus 907 is connected to the external bus 911 (e.g., a PCI (Peripheral Component Interconnect/Interface) bus) via the bridge 909.

The input device 915 is an operation means operated by a user, such as a mouse, a keyboard, a touch panel, buttons, a switch and a lever. Also, the input device 915 may be a remote control means (e.g., a so-called remote control) using, for example, infrared light or other radio waves, or may be an externally connected device 929 such as a mobile phone or a PDA conforming to the operation of the content providing server 10. Furthermore, the input device 915 generates an input signal based on, for example, information which is input by a user with the above operation means, and is configured from an input control circuit for outputting the input signal to the CPU 901. The user of the content providing server 10 can input various data to the content providing server 10 and can instruct the content providing server 10 to perform processing by operating this input apparatus 915.

The output device 917 is configured from a device capable of visually or audibly notifying acquired information to a user. Examples of such device include display devices such as a CRT display device, a liquid crystal display device, a plasma display device, an EL display device and lamps, audio output devices such as a speaker and a headphone, a printer, a mobile phone, a facsimile machine, and the like. For example, the output device 917 outputs a result obtained by various processings performed by the content providing server 10. More specifically, the display device displays, in the form of texts or images, a result obtained by various processes performed by the content providing server 10. On the other hand, the audio output device converts an audio signal such as reproduced audio data and sound data into an analog signal, and outputs the analog signal.

The storage device 919 is a device for storing data configured as an example of a storage unit of the content providing server 10 and is used to store data. The storage device 919 is configured from, for example, a magnetic storage device such as a HDD (Hard Disk Drive), a semiconductor storage device, an optical storage device, or a magneto-optical storage device. This storage device 919 stores programs to be executed by the CPU 901, various data, and various data obtained from the outside.

The drive 921 is a reader/writer for recording medium, and is embedded in the content providing server 10 or attached externally thereto. The drive 921 reads information recorded in the attached removable recording medium 927 such as a magnetic disk, an optical disk, a magneto-optical disk, or a semiconductor memory, and outputs the read information to the RAM 905. Furthermore, the drive 921 can write in the attached removable recording medium 927 such as a magnetic disk, an optical disk, a magneto-optical disk, or a semiconductor memory. The removable recording medium 927 is, for example, a DVD medium, an HD-DVD medium, or a Blu-ray medium. The removable recording medium 927 may be a CompactFlash (CF; registered trademark), a flash memory, an SD memory card (Secure Digital Memory Card), or the like. Alternatively, the removable recording medium 927 may be, for example, an IC card (Integrated Circuit Card) equipped with a non-contact IC chip or an electronic appliance.

The connection port 923 is a port for allowing devices to directly connect to the content providing server 10. Examples of the connection port 923 include a USB (Universal Serial Bus) port, an IEEE1394 port, a SCSI (Small Computer System Interface) port, and the like. Other examples of the connection port 923 include an RS--232C port, an optical audio terminal, an HDMI (High-Definition Multimedia Interface) port, and the like. By the externally connected apparatus 929 connecting to this connection port 923, the content providing server i Q directly obtains various data from the externally connected apparatus 929 and provides various data to the externally connected apparatus 929.

The communication device 925 is a communication interface configured from, for example, a communication device for connecting to a communication network 931. The communication device 925 is, for example, a wired or wireless LAN (Local Area Network), Bluetooth (registered trademark), a communication card for WUSB (Wireless USB), or the like. Alternatively, the communication device 925 may be a router for optical communication, a router for ADSL (Asymmetric Digital Subscriber Line), a modem for various communications, or the like. This communication device 925 can transmit and receive signals and the like in accordance with a predetermined protocol such as TCP/IP on the Internet and with other communication devices, for example. The communication network 931 connected to the communication device 925 is configured from a network and the like, which is connected via wire or wirelessly, and may be, for example, the Internet, a home LAN, infrared communication, radio wave communication, satellite communication, or the like.

Heretofore, an example of the hardware configuration capable of realizing the functions of the content providing server 10 according to the exemplary embodiment of the present invention has been shown. Each of the structural elements described above may be configured using a general-purpose material, or may be configured from hardware dedicated to the function of each structural element. Accordingly, the hardware configuration to be used can be changed as appropriate according to the technical level at the time of carrying out the present exemplary embodiment.

The hardware structure of the content reproducing apparatus according to the exemplary embodiment of the present invention is the same as the hardware structure of the content providing server according to the exemplary embodiment of the present invention. Therefore, the detailed description thereof is omitted.

### 4. Summary

As described above, in the method for determining the reproducing position according to the exemplary embodiment of the present invention, the viewing parameter is calculated for each content data and used as an index. Accordingly, reproduced scenes and displayed scenes can be dynamically changed. Therefore, for example, a viewer of content data can immediately view a scene which other people are interested in and a scene currently attracting interest. A server and a content distributor can provide a viewer's apparatus (content reproducing apparatus) with a scene or a time which the server and the content distributor want viewers to be interested in.

Since information such as metadata can be obtained not only from the content providing server but also from another content reproducing apparatus, the information about other people's evaluation obtained from these apparatuses can be reflected in the viewing parameter.

It should be understood by those skilled in the art that various modifications, combinations, sub-combinations and alterations may occur depending on design requirements and other factors insofar as they are within the scope of the appended claims or the equivalents thereof.

For example, in the above exemplary embodiments, various kinds of metadata are used to dynamically determine a reproducing position of a content. However, the system according to embodiments of the present invention can also be applied when various kinds of metadata are used to select a similar scene or comment.

In so far as embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The present application contains subject matter related to that disclosed in Japanese Priority Patent Application JP 2009-288142 filed in the Japan Patent Office on December 18, 2009, the entire content of which is hereby incorporated by reference.

In some embodiments a first temporal position may be an initial temporal position within a range.

In some embodiments selectively delivering content data may comprise: receiving, in response to a delivered representation, a request to obtain a first portion of the content data; and delivering at least the first portion of the content data to a destination device in response to the request.

In some embodiments selectively delivering the content data may comprise: selecting a first representation of a first portion of the content data, and a second representation of a second portion of the content data; and delivering the first and second representations to a destination device.

In some embodiments a step of calculating may comprise: computing weight factors for the metadata components; and applying the weight factors to the metadata components to generate weighted metadata.

In some embodiments a step of calculating may comprise: computing variations of metadata components.

Some embodiments may comprise calculating viewing parameters based on a linear combination of weighted metadata and computed variations.

## Claims

1. A computer-implemented method for delivering content data, comprising:
receiving the content data;
receiving metadata;
associating, with a processor, the metadata with a plurality of temporal positions in the content data; and
selectively delivering the content data based on the association.

2. The method of claim 1, wherein the metadata comprises metadata generated based on an evaluation criterion.

3. The method of claim 2, wherein the metadata comprises at least one of a viewer profile, a popularity index, or a violence rating.

4. The method of claim 1, wherein the associating comprises:
calculating viewing parameters corresponding to the plurality of temporal positions based on at least the received metadata,

5. The method of claim 4, wherein the associating further comprises:
selecting a first temporal position from the plurality of temporal positions; and
determining that the viewing parameter associated with the first temporal position satisfies a selection criterion.

6. The method of claim 5, wherein the determining comprises:
determining that the viewing parameter associated with the first temporal position is a maximum of the calculated viewing parameters.

7. The method of claim 5, wherein selectively delivering the content data comprises:
identifying a first portion of the received content data, the first portion being associated with the first temporal position.

8. The method of claim 7, wherein the first portion comprises content data associated with a range of temporal positions, the range of temporal positions comprising the first temporal position.

9. The method of claim 7, wherein selectively delivering the content data further comprises:
extracting the first portion from the received content data to generate modified content data; and
delivering the modified content data to a destination device.

10. The method of claim 7, wherein selectively delivering the content data further comprises:
delivering at least the first portion of the content data to a destination device.

11. The method of claim 7, wherein selectively delivering the content data further comprises:
selecting a representation of the first portion of the content data; and
delivering the representation to a destination device.

12. The method of claim 5, wherein the associating further comprises:
selecting a second temporal position from the plurality of temporal positions, wherein the viewing parameter associated with the first temporal position is larger in magnitude than the viewing parameter associated with the second temporal position.

13. The method of claim 12, wherein selectively delivering the content data comprises:
identifying a second portion of the received content data, the second portion being associated with the second temporal position.

14. The method of claim 4, wherein the received metadata comprises a plurality of metadata components.

15. The method of claim 1, further comprising:
receiving updated metadata;
wherein the associating comprises:
calculating updated viewing parameters for the plurality of temporal positions, the updated viewing parameters being based on at least the updated metadata.
